# EUROPEAN PATENT APPLICATION

(11) **EP 4 773 266 A1**
(43) Date of publication of application: **08.07.2026**
(21) Application number: 25204251.0
(22) Date of filing: 24.09.2025
(51) Int. Cl.: H01M 8/247, H01M 8/2475, H01M 8/248

(54) **STACK STRUCTURE**

(30) Priority: 07.01.2025 JP 2025002394
(71) Applicant: TOYOTA JIDOSHA KABUSHIKI KAISHA, Toyota-shi, Aichi-ken 471-8571 (JP)
(72) Inventor: TAKABATAKE, Yuma, Toyota shi, Aichi-ken, 471-8571 (JP); KANAZAWA, Hideyuki, Toyota shi, Aichi-ken, 471-8571 (JP)
(74) Representative: TBK

(57) **Abstract**

A stack structure includes a case having an opening, a cell stack disposed within the case, and an electrical device disposed outside the case and electrically connected to the cell stack through the opening. The case includes a first member having the opening, a second member connected to the first member, and a first sealing member that seals the boundary between the first member and the second member.

## Description

### BACKGROUND OF THE INVENTION

### 1. Field of the Invention

The technique disclosed in the present specification relates to stack structures.

### 2. Description of Related Art

Japanese Unexamined Patent Application Publication No. 62-165874 (JP 62-165874 A) discloses a fuel cell stack. The fuel cell stack of JP 62-165874 A includes a case and a cell stack disposed within the case.

### SUMMARY OF THE INVENTION

In a configuration including a cell stack as in JP 62-165874 A, it is conceivable to increase the number of cells in the cell stack. In such a case, the technique disclosed in JP 62-165874 A does not allow the size of the case to be changed in accordance with a change in the number of cells. The present specification provides a technique that allows the size of a case to be changed in accordance with a change in the number of cells in a cell stack.

According to a first aspect of the technique, a stack structure includes a case having an opening, a cell stack disposed within the case, and an electrical device disposed outside the case and electrically connected to the cell stack through the opening. The case includes a first member having the opening, a second member connected to the first member, and a first sealing member that seals the boundary between the first member and the second member. This configuration allows the size of the case to be changed in accordance with a change in the number of cells in the cell stack.

According to a second aspect, in the first aspect, the first sealing member may have an annular shape.

According to a third aspect, in the first or second aspect, the case may further include a third member connected to the second member, and a second sealing member that seals the boundary between the second member and the third member.

### BRIEF DESCRIPTION OF THE DRAWINGS

Features, advantages, and technical and industrial significance of exemplary embodiments of the invention will be described below with reference to the accompanying drawings, in which like signs denote like elements, and wherein:
FIG. 1 is a sectional view of a stack structure of an embodiment;
FIG. 2 is a sectional view taken along line II-II in FIG. 1;
FIG. 3 is a sectional view taken along line III-III in FIG. 1; and
FIG. 4 is a sectional view taken along line IV-IV in FIG. 1.

### DETAILED DESCRIPTION OF EMBODIMENTS

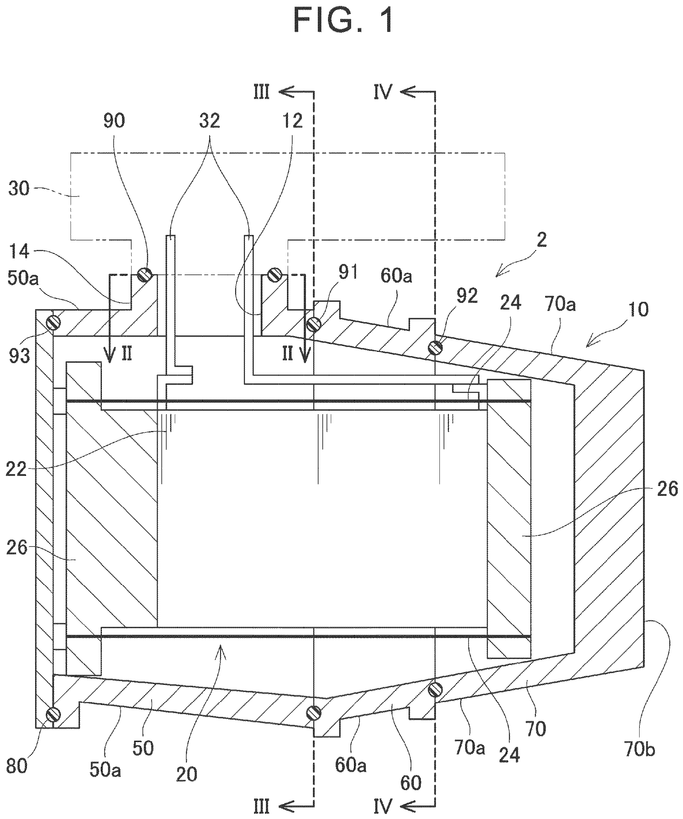

A stack structure 2 according to an embodiment will be described with reference to the drawings. As shown in FIG. 1, the stack structure 2 of the embodiment includes a case 10, a cell stack 20 disposed within the case 10, and an electrical device 30 disposed outside the case 10.

The case 10 that houses the cell stack 20 includes a main member 50, an intermediate member 60 connected to the main member 50, an end member 70 connected to the intermediate member 60, and a lid member 80 connected to the main member 50 on the side opposite from the intermediate member 60. The case 10 is formed by the members 50, 60, 70, 80.

The main member 50 constitutes a part of the case 10 and houses a portion of the cell stack 20. The main member 50 is formed in a generally rectangular tubular shape, with both axial ends open. The main member 50 may be configured such that the opening area on the side facing the intermediate member 60 is larger than the opening area on the side facing the lid member 80. The main member 50 includes a plurality of side walls 50a.

The main member 50 includes an opening 12 that connects the inside and outside of the case 10. The opening 12 is provided in one of the side walls 50a of the main member 50.

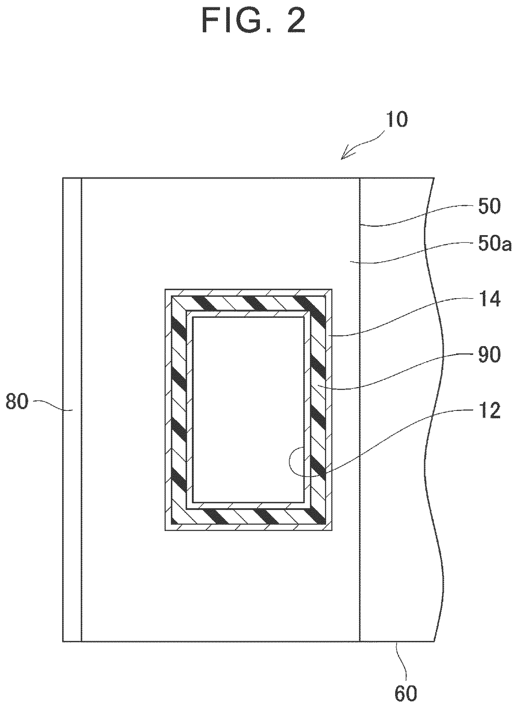

The main member 50 also includes a mounting portion 14 to which the electrical device 30 is attached. The mounting portion 14 is provided on one of the side walls 50a of the main member 50. The mounting portion 14 protrudes outward from the side wall 50a of the main member 50. The mounting portion 14 is provided around the opening 12 of the main member 50. As shown in FIG. 2, the mounting portion 14 is formed in a closed annular shape and surrounds the opening 12. A sealing member 90 is disposed at the boundary (connection portion) between the mounting portion 14 and the electrical device 30. The sealing member 90 seals the boundary (connection portion) between the mounting portion 14 and the electrical device 30. The sealing member 90 is formed in a closed annular shape.

The electrical device 30 (see FIG. 1) is, for example, a boost converter or a buck converter. The electrical device 30 is electrically connected to the cell stack 20 through the opening 12 of the case 10. The electrical device 30 is electrically connected to the cell stack 20 via a busbar 32. The busbar 32 has one end electrically connected to the cell stack 20 and the other end electrically connected to the electrical device 30. The busbar 32 extends from the inside to the outside of the case 10 through the opening 12 of the case 10.

The intermediate member 60 is connected to the main member 50 of the case 10. The main member 50 and the intermediate member 60 are joined by, for example, welding. The intermediate member 60 constitutes a part of the case 10 and houses a portion of the cell stack 20. The intermediate member 60 is formed in a generally rectangular tubular shape, with both axial ends open. The intermediate member 60 may be configured such that the opening area on the side facing the main member 50 is larger than the opening area on the side facing the end member 70. The intermediate member 60 includes a plurality of side walls 60a.

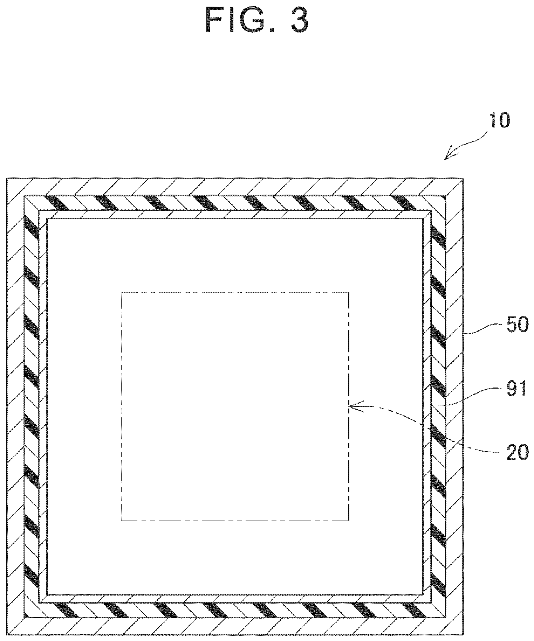

A first sealing member 91 is disposed at the boundary (connection portion) between the main member 50 and the intermediate member 60. The first sealing member 91 seals the boundary (connection portion) between the main member 50 and the intermediate member 60. As shown in FIG. 3, the first sealing member 91 is formed in a closed annular shape.

The end member 70 is connected to the intermediate member 60 of the case 10. The intermediate member 60 and the end member 70 are joined by, for example, welding. The end member 70 constitutes a part of the case 10 and houses a portion of the cell stack 20. The end member 70 is formed in a generally rectangular tubular shape, with one axial end open and the other axial end closed. The end member 70 includes a plurality of side walls 70a and an end wall 70b.

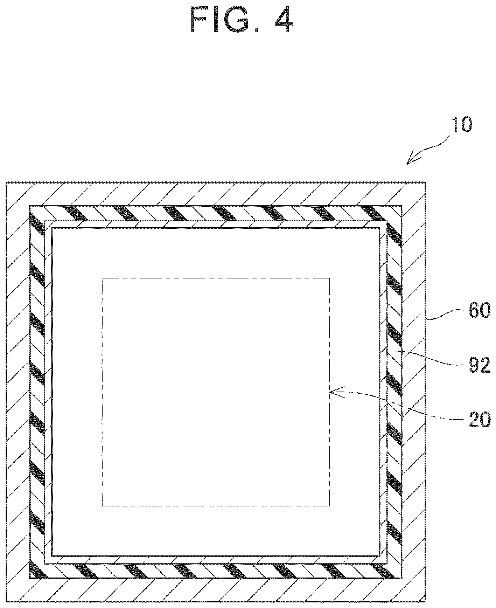

A second sealing member 92 is disposed at the boundary (connection portion) between the intermediate member 60 and the end member 70. The second sealing member 92 seals the boundary (connection portion) between the intermediate member 60 and the end member 70. As shown in FIG. 4, the second sealing member 92 is formed in a closed annular shape.

The lid member 80 is connected to the main member 50 on the side opposite from the intermediate member 60. The main member 50 and the lid member 80 are joined by, for example, welding. The lid member 80 constitutes a part of the case 10. A third sealing member 93 is disposed at the boundary (connection portion) between the main member 50 and the lid member 80. The third sealing member 93 seals the boundary (connection portion) between the main member 50 and the lid member 80. Like the first sealing member 91 and the second sealing member 92, the third sealing member 93 is formed in a closed annular shape.

The cell stack 20 is attached to the lid member 80. The cell stack 20 includes a plurality of cells 22, a pair of compression plates 26, and a plurality of shafts 24. The cells 22 are arranged between the compression plates 26. The cells 22 are stacked along the axial direction of the shafts 24. The cells 22 are stacked in a direction in which the members 50, 60, 70, 80 of the case 10 are arranged. Each cell 22 is a fuel cell and includes an air electrode, a fuel electrode, and an electrolyte (none of which are shown). The cells 22 that are adjacent to each other in the stacking direction are stacked with a separator (not shown) interposed therebetween.

The compression plates 26 face each other with the cells 22 interposed therebetween. The compression plates 26 are fastened by the shafts 24 while sandwiching the cells 22. The shafts 24 extend in the stacking direction of the cells 22.

The stack structure 2 according to the embodiment has been described above. As is apparent from the above description, the stack structure 2 includes the case 10 having the opening 12, the cell stack 20 disposed within the case 10, and the electrical device 30 disposed outside the case 10 and electrically connected to the cell stack 20 through the opening 12. The case 10 includes the main member 50 (an example of the first member) having the opening 12, the intermediate member 60 (an example of the second member) connected to the main member 50, and the first sealing member 91 that seals the boundary between the main member 50 and the intermediate member 60. This configuration allows the size of the case 10 to be changed in accordance with a change in the number of cells 22 in the cell stack 20.

The first sealing member 91 is formed in an annular shape. This configuration allows the boundary between the main member 50 and the intermediate member 60 to be sealed in an airtight manner.

The case 10 further includes the end member 70 (an example of the third member) connected to the intermediate member 60, and the second sealing member 92 that seals the boundary between the intermediate member 60 and the end member 70. This configuration allows the size of the case 10 to be changed in accordance with a change in the number of cells 22 in the cell stack 20.

Although specific examples of the present invention have been described in detail above, these are merely illustrative and are not intended to limit the scope of the claims. The invention defined in the claims includes various modifications and alterations of the examples illustrated above. The technical elements described in the present specification or illustrated in the drawings exhibit technical utility alone or in various combinations, and are not limited to the combinations described in the claims as filed. In addition, the techniques illustrated in the present specification or the drawings may simultaneously achieve a plurality of objects, and the achievement of any one of the objects alone provides technical utility.

## Claims

1. A stack structure comprising:
a case having an opening;
a cell stack disposed within the case; and
an electrical device disposed outside the case and electrically connected to the cell stack through the opening, wherein
the case includes
a first member having the opening,
a second member connected to the first member, and
a first sealing member that seals a boundary between the first member and the second member.

2. The stack structure according to claim 1, wherein the first sealing member has an annular shape.

3. The stack structure according to claim 1 or 2, wherein the case further includes
a third member connected to the second member, and
a second sealing member that seals a boundary between the second member and the third member.
